# FASCICULE DE BREVET EUROPEEN

(11) **EP 4 537 083 B1**
(45) Date de publication et mention de la délivrance du brevet: **25.11.2026**
(21) Numéro de dépôt: 23731211.1
(22) Date de dépôt: 06.06.2023
(51) Int. Cl.: G01N 21/21, G01N 21/03

(54) **SYSTÈME DE CARACTÉRISATION DE MOLÉCULES CHIRALES AVEC RECYCLAGE D'IMPULSION**
SYSTEM ZUR CHARAKTERISIERUNG CHIRALER MOLEKÜLE MIT IMPULSRECYCLING
SYSTEM FOR CHARACTERIZING CHIRAL MOLECULES WITH PULSE RECYCLING

(30) Priorité: 10.06.2022 FR 2205631
(43) Date de publication de la demande: 16.04.2025
(73) Titulaire: Centre National de la Recherche Scientifique, 75016 Paris (FR); Commissariat à l'Energie Atomique et aux Energies Alternatives, 75015 Paris (FR); UNIVERSITE DE BORDEAUX, 33000 Bordeaux (FR)
(72) Inventeur: COMBY, Antoine, 33000 BORDEAUX (FR); DESCAMPS, Dominique, 33405 TALENCE cedex (FR); MAIRESSE, Yann, 33800 BORDEAUX (FR); PETIT, Stéphane, 33830 BELIN-BELIET (FR)
(74) Mandataire: IPAZ
(86) Numéro de dépôt international: PCT/EP2023/065064
(87) Numéro de publication internationale: WO 2023/237521

(56) Documents cités:
- US-A1- 2009 296 744
- US-A1- 2018 321 164
- THOMAS MÜLLER ET AL: "Cavity ring-down polarimetry (CRDP): theoretical and experimental characterization", JOURNAL OF THE OPTICAL SOCIETY OF AMERICA B, vol. 19, no. 1, 1 January 2002 (2002-01-01), pages 125 - 141, XP055696328
- ANTOINE COMBY ET AL: "Using photoelectron elliptical dichroism (PEELD) to determine real-time variation of enantiomeric excess", CHIRALITY, WILEY-LISS, NEW YORK, US, vol. 32, no. 10, 22 July 2020 (2020-07-22), pages 1225 - 1233, XP071748004, ISSN: 0899-0042, DOI: 10.1002/CHIR.23267
- TEN HAAF G ET AL: "Measurements of the energy distribution of an ultracold rubidium ion beam", ARXIV.ORG, CORNELL UNIVERSITY LIBRARY, 201 OLIN LIBRARY CORNELL UNIVERSITY ITHACA, NY 14853, 31 October 2017 (2017-10-31), XP081297405
- BEAUVARLET SANDRA ET AL: "Photoelectron elliptical dichroism spectroscopy of resonance-enhanced multiphoton ionization via the 3s, 3p and 3d Rydberg series in fenchone", PHYSICAL CHEMISTRY CHEMICAL PHYSICS : PCCP, 16 March 2022 (2022-03-16), England, pages 6415 - 6427, XP093002767, Retrieved from the Internet <URL:https://pubs.rsc.org/en/content/articlepdf/2022/cp/d1cp05618b> [retrieved on 20221128], DOI: 10.1039/D1CP05618B

## Description

### Domaine technique

La présente invention concerne un système de caractérisation de molécules chirales.

Le domaine de l'invention est le domaine de l'analyse chimique de mélanges de molécules chirales.

### État de la technique

L'analyse de mélanges chimiques est un outil essentiel dans de nombreux processus industriels, tant en R&D qu'en contrôle qualité. Ces molécules existent sous au moins deux formes appelées énantiomères qui ne sont pas superposables à leur image miroir, et l'une des formes peut être toxique.

Les molécules chirales sont particulièrement difficiles à analyser. Or, ces molécules jouent un rôle crucial dans de nombreux domaines industriels tels que la pharmacologie, l'agro-alimentaire, l'agrochimie, etc., où la pureté énantiomérique peut être d'une importance capitale. Par exemple, une majorité des médicaments et composés pharmaceutiques comprennent des molécules chirales. Comme la réaction d'un organisme à une molécule peut dépendre de sa chiralité, il est crucial de connaître la composition énantiomérique des molécules de ces composés. L'excès énantiomérique d'un produit doit être déterminé avec une précision de 99,9% avant sa commercialisation.

Une technique historique pour l'analyse de la chiralité moléculaire repose sur le dichroïsme circulaire d'absorption (CD). En mesurant la différence d'absorption d'un rayonnement polarisé circulairement droite ou gauche, on peut obtenir de l'information sur la chiralité d'un échantillon. Cependant, le CD est un effet très faible, qui requiert des échantillons denses (liquides) et donc de grandes quantités de matière. Il fournit des signaux faibles, nécessitant de longues acquisitions pour obtenir un bon rapport signal sur bruit.

Pour pallier à ce problème, de nouveaux types de dichroïsmes circulaires sont développés. Par exemple, une technique reconnue, le dichroïsme circulaire de photoélectrons (PECD), consiste en l'ionisation des molécules chirales d'un échantillon gazeux par un rayonnement polarisé circulairement. La distribution angulaire des électrons éjectés par l'ionisation présente une forte asymétrie le long de l'axe de propagation de la lumière. Ainsi, plus ou moins d'électrons sont émis vers l'avant ou vers l'arrière selon l'hélicité de la lumière (sens de rotation de la polarisation circulaire) ou l'énantiomérie de la molécule. Cette technique peut utiliser du rayonnement dans la gamme ultraviolet extrême (XUV) pour une ionisation à un seul photon, ou du rayonnement laser ultraviolet, visible ou infrarouge, auquel cas l'ionisation est multi-photonique.

Il est aussi possible d'utiliser une variante du PECD, appelé dichroïsme elliptique de photoélectrons (PEELD). Dans ce cas, l'état de polarisation est varié de façon continue en oscillant une fréquence propre ω. La distribution angulaire va ainsi osciller à des multiples de cette fréquence ω. Le signal asymétrique avant/arrière oscillera aux fréquences multiples impaires, et l'amplitude de ces oscillations donne la composition chirale d'un échantillon mesurée. Cette détection synchrone donne un bien meilleur rapport signal sur bruit.

De façon générale, la précision des mesures de chiralité dépend directement du niveau de signal détecté. Plus ce signal est élevé, plus le rapport signal sur bruit est élevé.

Pour cette raison, les méthodes reposant sur l'utilisation de lasers impulsionnels bénéficient grandement de l'augmentation du taux de répétition de ces sources de lumière. Plus le nombre d'impulsions délivrées est élevé, plus la mesure sera précise. Cependant, l'augmentation du taux de répétition d'un laser nécessite une augmentation de la puissance moyenne du laser, ce qui entraîne des surcoûts importants. En effet, le coût d'une source laser dépend fortement de la puissance délivrée. A. Comby et al. "Using photoelectron elliptical dichroism (PEELD) to determine real-time variation of enantiomeric excess", Chiralty, 2020, 32:1225-1233 décrit une méthode d'analyse en temps réel de l'excès énantiomérique de molécules chirales par dichroïsme elliptique de photoélectrons utilisant un laser femtoseconde polarisé elliptiquement et la détection de l'asymétrie angulaire des photoélectrons.

### Exposé de l'invention

Un but de la présente invention est de proposer un système de caractérisation pouvant palier à ces problèmes.

Un but de la présente invention est de proposer un système de mesure permettant la mesure de la chiralité de molécules de manière précise et rapide.

Il est aussi un but de la présente invention de proposer un système de mesure dont le coût d'opération est maîtrisé.

Au moins un de ces objectifs est atteint avec un système de caractérisation de molécules chirales, comprenant :
- une zone d'ionisation agencée pour recevoir un échantillon de molécules chirales ;
- une source laser agencée pour émettre un rayonnement laser pulsé, le rayonnement laser étant adapté pour interagir avec les molécules dans la zone d'ionisation ;
- un modulateur de polarisation agencé pour polariser le rayonnement laser elliptiquement ;
- une cavité optique configurée pour rediriger le rayonnement laser pulsé dans la zone d'ionisation plusieurs fois ;
- des moyens de détection, comprenant un détecteur d'électrons, agencés pour détecter une distribution d'électrons produits par l'ionisation émis en avant et en arrière de la zone d'ionisation par rapport à l'axe, z, de propagation du rayonnement laser ;
- des moyens de détermination agencés et/ou programmés pour déterminer au moins la chiralité des molécules à partir du signal chiroptique détecté.

Le système de caractérisation selon la présente invention permet de déterminer la chiralité de molécules grâce à l'interaction d'un faisceau laser polarisé elliptiquement avec ces molécules. En recyclant les impulsions laser, un laser de moindre puissance peut être utilisé tout en augmentant la puissance moyenne effective et la cadence effective. Les interactions des molécules avec les différents faisceaux s'additionnent et produisent un signal correspondant à la superposition de plusieurs signaux essentiellement identiques. En effet, en inversant la direction de propagation du faisceau laser dans la cavité optique, le sens de rotation de la polarisation du champ électromagnétique est également inversé. Cette double-inversion entraîne l'augmentation du niveau du signal, permettant ainsi de diminuer le temps de mesure. De plus, la précision de la mesure est augmentée également grâce à l'augmentation de la puissance moyenne effective. Grâce au montage optique simple et facile à mettre en œuvre de la cavité optique de recyclage, un système de caractérisation puissant et rapide peut être obtenu à un coût modéré, sans la nécessité d'intégrer une source laser pulsée de forte puissance moyenne.

Un exemple de mise en œuvre de l'invention est basée sur le dichroïsme elliptique des électrons, ou photoélectrons, mesuré en continu. Ainsi, l'évolution de la distribution des électrons émis en avant et en arrière, et donc de son asymétrie, est mesurée en fonction du temps et en fonction de l'état de polarisation du rayonnement électromagnétique. En faisant varier l'ellipticité de la polarisation du rayonnement de manière continue et périodique en fonction du temps, le signal mesuré en continu est un signal périodique permettant par la suite d'effectuer des analyses de l'échantillon de molécules plus simples et rapides.

Selon un mode de réalisation, l'interaction comprend une ionisation des molécules, et les moyens de détection peuvent comprendre un détecteur d'électrons agencé pour détecter une distribution d'électrons produits par l'ionisation émis en avant et en arrière de la zone d'interaction par rapport à l'axe, z, de propagation du rayonnement laser.

Dans le cadre de la présente invention, le terme « distribution d'électrons » peut signifier à la fois :
- un nombre d'électrons, obtenu par simple comptage,
- une distribution spatiale d'électrons, ou
- une distribution angulaire d'électrons,

les électrons étant émis vers l'avant et vers l'arrière de la zone d'ionisation par rapport à l'axe de propagation du rayonnement ionisant.

Ainsi, dans le cadre de la présente invention, la chiralité des molécules de l'échantillon peut être déterminée à partir du nombre d'électrons émis en avant et du nombre d'électrons émis en arrière. Comme la cavité optique permet d'inverser à la fois le sens de propagation de la lumière et le sens de rotation de sa polarisation (hélicité), l'asymétrie d'électrons sur le détecteur présente le même signe à chaque passage du rayonnement laser dans l'échantillon, permettant d'augmenter le signal.

De manière avantageuse, la cavité optique peut être formée de deux miroirs sphériques.

Les miroirs sont agencés de sorte à ce que le faisceau lumineux réfléchi sur les miroirs soit toujours focalisé essentiellement au même endroit et fasse un nombre d'allers-retours le plus élevé possible.

Il est notamment important que les diamètres des miroirs soient grands comparés à la taille initiale du faisceau laser.

Alternativement, la cavité optique peut être formée par deux miroirs plans.

Selon une variante, chacun des miroirs plans peut être combiné avec une lentille.

Le choix de la construction de la cavité optique dépend notamment de la forme que l'on souhaite donner au faisceau dans la cavité (par exemple, focalisation ou non dans la cavité).

Selon un mode de réalisation, le modulateur de polarisation peut être agencé pour faire varier l'ellipticité de polarisation du rayonnement laser de manière continue en fonction du temps.

Selon un exemple, le modulateur de polarisation peut comprendre une lame quart d'onde agencée pour être mise en rotation autour de l'axe, z, de propagation du rayonnement laser.

Un tel modulateur est particulièrement simple à mettre en œuvre, peu encombrant et économique. Des dispositifs de mise en rotation motorisés disponibles dans le commerce peuvent être utilisés avec la lame quart d'onde.

Il est également possible d'utiliser d'autres types de modulateurs de polarisation, tels que des éléments électro-optiques (cellule de Pockels, etc.).

Selon une variante, l'ellipticité de la polarisation peut être modulée par contrôle interférométrique des deux composantes de polarisation.

Selon un exemple, le détecteur d'électrons peut comprendre au moins un imageur de vecteurs vitesse.

Selon un mode de réalisation, la source laser pulsée peut être une source laser pulsée délivrant des impulsions femtosecondes.

Selon un exemple non limitatif, la longueur d'onde de la source laser pulsée peut être dans le domaine allant de l'ultraviolet au visible.

Selon une variante avantageuse, la source laser pulsée peut être un laser fibré à haute cadence.

De telles sources laser sont disponibles dans le commerce et sont faciles à mettre en œuvre avec le système selon l'invention.

De manière générale, la longueur d'onde de la source de rayonnement électromagnétique détermine le type d'ionisation des molécules, soit l'ionisation à un seul photon, soit l'ionisation multi-photonique.

En effet, des sources laser pulsées ayant des longueurs d'onde dans le domaine visible, l'infrarouge ou l'ultraviolet produisent du rayonnement susceptible de provoquer de l'ionisation multi-photonique. En revanche, des sources lumineuses d'ultraviolet lointain ou extrême peuvent induire l'ionisation à un seul photon, qu'elles soient continues ou pulsées.

Typiquement, les moyens de détermination comprennent au moins un ordinateur, une unité centrale ou de calcul, un circuit électronique analogique (de préférence dédié), un circuit électronique numérique (de préférence dédié), et/ou un microprocesseur (de préférence dédié), et/ou des moyens logiciels.

Le système selon l'invention peut être utilisé pour la mesure de la chiralité de molécules dans le domaine de la pharmacologie, de l'agro-alimentaire ou encore des pesticides. En effet, ces industries, parmi d'autres, ont besoin de techniques d'analyse chirale fiables et rapides, notamment dans les phases de développement de nouveaux composés, afin d'identifier, par exemple, les produits de réaction et leurs excès énantiomériques.

Selon un premier exemple d'application, il peut être très utile de suivre en temps réel la composition d'un mélange dans lequel se déroule une réaction chimique. Ce suivi réactionnel peut être réalisé directement avec le système selon l'invention, notamment en collectant les vapeurs émises par le réservoir dans lequel se déroule la réaction.

Selon un deuxième exemple d'application, il peut être très utile de procéder à des mesures d'analyse chirale en série, notamment lors de la synthèse de multiples produits aux structures très proches dans la recherche et le développement, où les facteurs fiabilité et rapidité sont très importants. Par exemple, à une molécule de base peuvent être substitués différents groupes fonctionnels pour converger vers un composé présentant des propriétés recherchées optimales. Dans ce domaine spécialisé, les composés intermédiaires à mesurer sont souvent générés en faible quantité, contrainte que le système selon la présente invention propose à respecter.

Selon un troisième exemple d'application, l'analyse chirale est effectuée en contrôle de qualité et notamment en fin de production. Idéalement, un prélèvement très régulier, voire en continu, de très petites quantités de produits à analyser avec une analyse en temps réel permet de quantifier l'excès énantiomérique et son évolution dans le temps.

Selon un quatrième exemple d'application, il est possible de faire des tests en criblage, où par un exemple un très grand nombre de catalyseurs ou de conditions opératoires (températures, pH, etc.) sont utilisés pour orienter une réaction chimique à produire préférentiellement un énantiomère plutôt qu'un autre.

Plus généralement, le système de mesure selon l'invention peut être utilisé pour l'analyse de la pureté énantiomérique d'un échantillon de molécules chirales.

### Description des figures et modes de réalisation

D'autres avantages et caractéristiques apparaîtront à l'examen de la description détaillée d'exemples nullement limitatifs, et des dessins annexés sur lesquels :
- la [Fig.1] est une représentation schématique d'un exemple de réalisation non limitatif d'un système selon l'invention ;
- la [Fig.2] montre des exemples de mesures de foyers dans la cavité optique d'un système selon un mode de réalisation ;
- la [Fig.3] représente schématiquement l'interaction du rayonnement laser avec un échantillon dans une cavité optique d'un système selon l'invention ;
- la [Fig.4] montre des exemples de mesures de signaux chiroptiques avec un système selon l'invention ; et
- la [Fig.5] présente des résultats de mesures réalisées avec un système selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieur. Cette sélection comprend au moins une caractéristique de préférence fonctionnelle sans détail structurel, ou avec seulement une partie des détails structurels si cette partie uniquement est suffisante pour conférer un avantage technique ou pour différencier l'invention par rapport à l'état de la technique antérieur. L'invention n'est limitée que par les revendications ci-jointes.

En particulier toutes les variantes et tous les modes de réalisation décrits sont combinables entre eux si rien ne s'oppose à cette combinaison sur le plan technique.

Sur les figures, les éléments communs à plusieurs figures peuvent conserver la même référence.

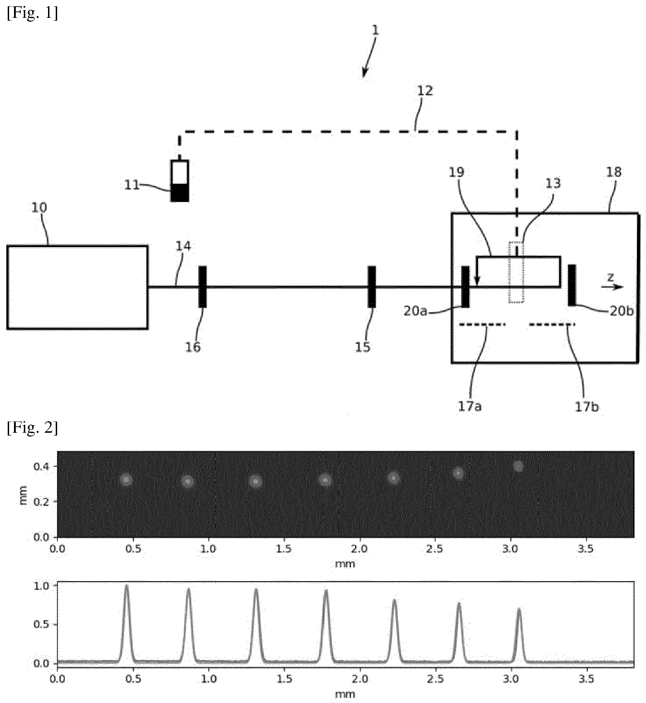

La [Fig.1] est une représentation schématique d'un exemple de réalisation non limitatif d'un système de mesure selon l'invention.

Le système 1, représenté sur la [Fig.1], comprend une source laser pulsée 10.

Selon un exemple, cette source laser 10 est une source laser fibré doublé en fréquence (par exemple, 515 nm) au moyen de cristaux non-linéaires. Les impulsions émises sont des impulsions femto-secondes, par exemple de l'ordre de 350 fs à une cadence de 100 kHz. L'énergie par impulsion est de l'ordre de 20 µJ pour une puissance moyenne de 2W. Avec une telle source laser, l'ionisation de molécules est une ionisation multi-photonique résonante.

Il existe différents types de sources laser femto-secondes utilisables dans le cadre de l'invention, qui sont bien connues de l'homme du métier et ne seront pas détaillées ici.

Le système 1 comprend en outre un réservoir 11 de molécules. Le mélange de molécules dans le réservoir 11 peut être mono- ou multi-espèce. Le mélange peut être présent sous forme solide, liquide ou gazeuse. Le réservoir 11 peut être, par exemple, une fiole.

Un échantillon de molécules est acheminé, sous forme gazeuse, à travers un conduit de gaz 12 vers une zone 13 d'interaction, ou d'ionisation. Pour obtenir la forme gazeuse lorsque le mélange dans le réservoir 11 est solide ou liquide, le réservoir 11 peut, par exemple, être chauffé.

La zone d'ionisation 13 est de manière générale mise en œuvre par une chambre sous vide 18 dans laquelle le gaz est introduit.

Le faisceau lumineux 14 émis par le laser 10 est dirigé vers et focalisé dans la zone d'interaction 13 à l'aide de moyens de formation de faisceau connus, tels que des miroirs et des lentilles, représentés par la référence 15 dans la [Fig.1].

Les moyens de formation de faisceau 15 peuvent notamment comprendre une lentille de focalisation de focale f. En référence à la [Fig.1], le faisceau 14 est focalisé par la lentille 15 de sorte à ce que le foyer se trouve dans la zone d'interaction 13. L'intensité lumineuse à ce premier foyer est par exemple de l'ordre de 10¹²- 10¹³ W/cm².

Le système 1 selon l'invention comprend également une cavité optique 19, agencée de telle sorte que la zone d'interaction 13 se trouve à l'intérieur de la cavité 19. Dans l'exemple représenté sur la [Fig.1], la cavité optique 19 comprend deux miroirs 20a, 20b agencés à l'intérieur de la chambre sous vide 18. Les miroirs 20a, 20b sont des miroirs sphériques focalisants de focale f₁ et f₂, respectivement.

Le faisceau lumineux 14, après avoir été focalisé dans la zone d'interaction 13 par la lentille de focalisation 15, diverge et arrive sur le second miroir 20b. Le second miroir est positionné à une distance de 2f₂ du plan focal de la lentille 15. Le faisceau 14 est ainsi réfléchi par le second miroir 20b et refocalisé dans un plan focal correspondant au premier foyer de la lentille 15. Après avoir été focalisé dans le deuxième foyer du second miroir 20b, le faisceau diverge et arrive sur le premier miroir 20a positionné à une distance de 2f₁ du plan focal. Le faisceau 14 est ainsi réfléchi par le premier miroir 20a et encore refocalisé au même endroit que se trouvent le premier et deuxième foyers. Les miroirs 20a, 20b sont alignés de sorte à ce que le faisceau lumineux 14 fasse des allers-retours dans la cavité 19 un grand nombre de fois. Pour cela, le diamètre initial du faisceau doit être faible par rapport aux diamètres des miroirs 20a, 20b et de la lentille 15.

Selon un exemple, avec une source laser doublé en fréquence (515 nm, 100 kHz, 350 fs) comme décrit ci-dessus, un premier miroir 20a de 175/2 mm de focale et un second miroir 20b de 150/2 mm de focale, les deux miroirs ayant un diamètre de 25,4 mm, il est possible d'obtenir environ une dizaine de réflexions par miroir, correspondant à environ une vingtaine de foyers, avant que le faisceau 14 ne quitte la cavité 19.

La [Fig.2](a) montre des mesures de foyers dans la cavité optique 19. Pour cela, une lame de prélèvement est placée au milieu de la cavité optique 19 pour extraire une partie du faisceau 14. Les intensités lumineuses dans sept foyers sont ainsi imagées. La [Fig.2](b) montre les profils horizontaux 40 des intensités lumineuses de la [Fig.2](a), ainsi que des courbes Gaussiennes 41 de largeurs égales. On observe que la taille des différents foyers ne varie que très peu après des multiples allers-retours du faisceau. Ceci signifie que le faisceau 14 reste proprement focalisé après ces allers-retours.

Le système 1 selon l'invention comprend en outre un modulateur de polarisation 16. De préférence, le modulateur de polarisation 16 est agencé pour polariser le rayonnement laser 14 elliptiquement et pour varier l'ellipticité de la polarisation de manière continue en fonction du temps. Ici le modulateur de polarisation 16 est composé d'une lame quart d'onde tournant à 45°/s.

La mise en rotation de la lame quart d'onde peut être réalisée par tout moyen connu de l'homme du métier, notamment à l'aide d'un support de lame motorisé.

Lorsque le rayonnement laser interagit avec les molécules présentes dans la zone d'ionisation, les molécules sont ionisées en éjectant des électrons. De préférence, au moins une molécule est ionisée par impulsion laser. Les électrons sont émis dans différentes directions. En raison de la chiralité des molécules, la distribution angulaire et/ ou spatiale des électrons émis est asymétrique, ce qui signifie que plus d'électrons sont émis en avant qu'en arrière, ou plus d'électrons sont émis en arrière qu'en avant.

Toujours en référence à la [Fig.1], le système 1 selon l'invention comprend en outre des moyens de détection d'électrons agencés pour détecter les électrons, ou photoélectrons, produits par l'ionisation des molécules et émis en avant et en arrière de la zone d'ionisation 13 par rapport à l'axe z de propagation de la lumière. Dans l'exemple de réalisation représenté, ces moyens de détection sont symbolisés par des plaques 17a, 17b positionnées an avant et en arrière de la zone d'ionisation 13.

Des moyens de détection d'électrons incluent, par exemple, un spectromètre imageur de vitesses des électrons (*velocity map imaging (VMI) spectrometer* en langue anglaise). Un tel spectromètre VMI image et convertit la distribution angulaire et/ou spatiale électronique en signal optique qui peut être mesuré par une caméra.

D'autres détecteurs d'électrons sont, par exemple, des détecteurs mesurant directement le nombre d'électrons émis vers l'avant et vers l'arrière en les guidant grâce à un champ magnétique sur deux détecteurs.

Lorsqu'un spectromètre VMI est mis en œuvre, la distribution spatiale des électrons S(x,z,ε), qui dépend de la position (x,z) sur le détecteur et de l'ellipticité de la polarisation du faisceau laser ε, est mesurée. En utilisant une polarisation circulaire ou elliptique, on observe des électrons partant préférentiellement à l'arrière (direction -z) ou à l'avant (direction +z) par rapport à la direction z de propagation du faisceau laser. Il est alors avantageux d'observer le signal antisymétrique ASYM(x,z,ε) = 1/2(S(x,-z,ε)-S(x,z,ε)). Le signe de ce signal s'inverse si l'on inverse la direction de propagation z de la lumière : ASYM(x,+z,ε)= - ASYM(x,-z,ε). De plus, en utilisant un modulateur de polarisation oscillant à la fréquence ω, la distribution angulaire asymétrique des électrons ASYM est modulée dans le temps, notamment aux fréquences propres ω₁ = 1/2ω et ω₃ = 3/2ω, en chaque position (x,z) : ASYM(x,z,ω₁) et ASYM(x,z,ω₃).

Lorsque le faisceau lumineux 14 effectue des allers-retours dans la cavité optique 19, produisant ainsi une séquence d'impulsions, l'état de polarisation du faisceau lumineux 14 est inversé (l'ellipticité change de signe) en même temps que son sens de propagation. Le signal asymétrique étant déterminé par ce sens de rotation de la polarisation de la lumière, il s'inverse lorsque l'ellipticité change de signe : ASYM(x,z,ε) = - ASYM(x,z,-ε). Ainsi, en inversant à la fois la direction de propagation et le signe de l'ellipticité de la polarisation à chaque passage du faisceau dans l'échantillon, la cavité optique 19 permet de conserver un signal de même signe puisque ASYM(x,z,ε) = ASYM(x,-z,-ε).

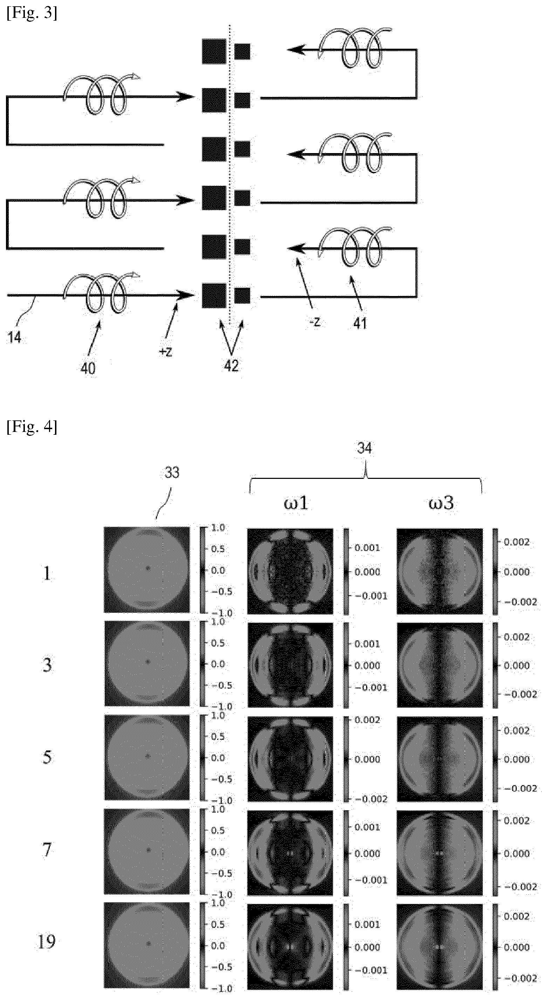

La [Fig.3] illustre des passages du faisceau laser 14 dans la cavité optique. Le faisceau 14, ayant initialement une polarisation circulaire gauche 40 et se propageant selon la direction +z, change de signe de polarisation et de direction de propagation à chaque réflexion. La polarisation passe ainsi de circulaire gauche 40 à circulaire droite 41, et la direction de propagation de +z à -z. La distribution angulaire et/ou spatiale d'électrons est schématiquement indiquée par des carrés 42. La distribution totale générée par la totalité de la séquence d'impulsions laser, est pratiquement identique à une distribution générée par une seule impulsion. La distribution générée par l'ensemble des impulsions présente un meilleur rapport signal sur bruit, comme il sera démontré ci-dessous.

La [Fig.4] représente des distributions de photoélectrons moyenne S(x,z) 33 et asymétriques ASYM(x,z,ω₁) et ASYM(x,z,ω₃) 34 pour différents nombres de foyers (1, 3, 5, 7 et 19 foyers), c'est-à-dire d'allers-retours du faisceau lumineux dans la cavité. Les distributions de photoélectrons ont été imagées avec une lentille électrostatique en mode imageur de vecteurs de vitesse des photoélectrons produits. On observe une imagerie des distributions de photoélectrons pratiquement indépendante du nombre de foyers utilisés.

Le système 1 selon l'invention comprend également un dispositif de détermination (non représenté sur la [Fig.1]), tel qu'un ordinateur. Ce dispositif est notamment agencé pour effectuer la détermination de la chiralité des molécules à partir de la distribution spatiale ou angulaire d'électrons détectée de manière continue en fonction du temps.

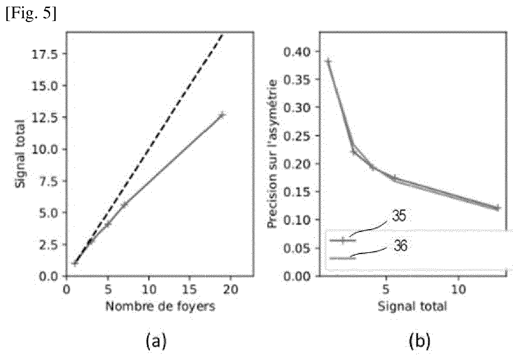

La [Fig.5] montre des résultats de mesures réalisées avec un système selon l'invention.

La [Fig.5](a) présente l'évolution du signal total de photoélectrons en fonction du nombre de foyers. On constate que le signal augmente quasiment proportionnellement au nombre de passages du faisceau dans la cavité optique.

La courbe 35 de la [Fig.5](b) montre l'évolution de la dispersion de 25 mesures de 8 s, en fonction du signal total mesuré. Cette dispersion est calculée comme étant la déviation standard, et représente le bruit de la mesure. La courbe 36 représente un ajustement de la courbe 35 en 1/√x.

On constate à partir des Figures 5(a) et 5(b) que plus le nombre de passages du faisceau dans la cavité augmente, plus le niveau du bruit diminue d'un facteur proche de 1/√N, avec N le nombre de passages. Or la dépendance en 1/√x est attendue pour toute mesure dont on augmente le temps d'acquisition d'un facteur x. Ceci démontre qu'effectuer N passages est équivalent à augmenter le temps de mesure d'un facteur N. Le principe de recyclage d'impulsions, mis en œuvre par le système de mesure selon la présente invention, permet donc d'augmenter le niveau du signal d'un facteur supérieur à 10, et d'obtenir une amélioration de la précision d'un facteur d'environ 3, équivalent à une mesure de durée d'acquisition 10 fois plus longue, sans utiliser un laser plus puissant et plus coûteux. L'augmentation du niveau du signal permet également de diminuer le temps de mesure.

Bien sûr, l'invention n'est pas limitée aux exemples qui viennent d'être décrits et de nombreux aménagements peuvent être apportés à ces exemples sans sortir du cadre de l'invention, qui est limitée par les revendications ci-jointes.

## Revendications

1. Système (1) de caractérisation de molécules chirales, comprenant :
- une zone d'ionisation (13) agencée pour recevoir un échantillon de molécules chirales ;
- une source laser (10) agencée pour émettre un rayonnement laser pulsé (14), le rayonnement laser étant adapté pour ioniser les molécules dans la zone d'ionisation (13) ;
- un modulateur de polarisation (16) agencé pour polariser le rayonnement laser (14) elliptiquement ;
- une cavité optique (19) configurée pour rediriger le rayonnement laser pulsé dans la zone d'ionisation plusieurs fois ;
- des moyens de détection (17a, 17b), comprenant un détecteur d'électrons, agencés pour détecter une distribution d'électrons produits par l'ionisation émis en avant et en arrière de la zone d'ionisation (13) par rapport à l'axe, z, de propagation du rayonnement laser (14) ; et
- des moyens de détermination agencés et/ou programmés pour déterminer au moins la chiralité des molécules à partir de la distribution d'électrons détectée.

2. Système (1) selon la revendication 1, **caractérisé en ce que** la cavité optique (19) est formée de deux miroirs sphériques (20a, 20b).

3. Système (1) selon l'une quelconque des revendications précédentes, **caractérisé en ce que** le modulateur de polarisation (16) est agencé pour faire varier l'ellipticité de polarisation du rayonnement laser (14) de manière continue en fonction du temps.

4. Système (1) selon la revendication précédente, **caractérisé en ce que** le modulateur de polarisation (16) comprend une lame quart d'onde agencée pour être mise en rotation autour de l'axe, z, de propagation du rayonnement laser (14).

5. Système (1) selon l'une quelconque des revendications précédentes, **caractérisé en ce que** le détecteur d'électrons comprend au moins un imageur de vecteurs vitesse.

6. Système (1) selon l'une quelconque des revendications précédentes, **caractérisé en ce que** la source laser pulsée (10) est une source laser pulsée femto-secondes.

## Patentansprüche

1. System (1) für eine Charakterisierung chiraler Moleküle, umfassend:
- einen Ionisationsbereich (13), der zum Aufnehmen einer Probe chiraler Moleküle angeordnet ist;
- eine Laserquelle (10), die zum Emittieren einer gepulsten Laserstrahlung (14) angeordnet ist, wobei die Laserstrahlung zum Ionisieren der Moleküle in dem Ionisationsbereich (13) angepasst ist;
- einen Polarisationsmodulator (16), der zum elliptischen Polarisieren der Laserstrahlung (14) angeordnet ist;
- einen optischen Resonator (19), der zum mehrmaligen Umlenken der gepulsten Laserstrahlung in den Ionisationsbereich konfiguriert ist;
- Detektionsmittel (17a, 17b), umfassend einen Elektronendetektor, die zum Detektieren einer Verteilung von Elektronen, die durch die Ionisation erzeugt werden, die vor und hinter dem Ionisationsbereich (13) in Bezug auf die Ausbreitungsachse, z, der Laserstrahlung (14) emittiert werden, angeordnet sind; und
- Bestimmungsmittel, die zum Bestimmen mindestens der Chiralität der Moleküle aus der detektierten Elektronenverteilung angeordnet und/oder programmiert sind.

2. System (1) nach Anspruch 1, **dadurch gekennzeichnet, dass** der optische Resonator (19) aus zwei sphärischen Spiegeln (20a, 20b) ausgebildet ist.

3. System (1) nach einem der vorstehenden Ansprüche, **dadurch gekennzeichnet, dass** der Polarisationsmodulator (16) zum kontinuierlichen Variieren der Polarisationselliptizität der Laserstrahlung (14) in Abhängigkeit von der Zeit angeordnet ist.

4. System (1) nach dem vorstehenden Anspruch, **dadurch gekennzeichnet, dass** der Polarisationsmodulator (16) ein Viertelwellenlängenplättchen umfasst, das angeordnet ist, um um die Ausbreitungsachse, z, der Laserstrahlung (14) gedreht zu werden.

5. System (1) nach einem der vorstehenden Ansprüche, **dadurch gekennzeichnet, dass** der Elektronendetektor mindestens einen Geschwindigkeitsvektorbildgeber umfasst.

6. System (1) nach einem der vorstehenden Ansprüche, **dadurch gekennzeichnet, dass** die gepulste Laserquelle (10) eine gepulste Femtosekunden-Laserquelle ist.

## Claims

1. A system (1) for characterizing chiral molecules, comprising:
- an ionization zone (13) arranged to receive a sample of chiral molecules;
- a laser source (10) arranged to emit pulsed laser radiation (14), the laser radiation being suitable for ionizing the molecules in the ionization zone (13);
- a polarization modulator (16) arranged to elliptically polarize the laser radiation (14);
- an optical cavity (19) configured to redirect the pulsed laser radiation into the ionization zone several times;
- detection means (17a, 17b), comprising an electron detector, arranged to detect a distribution of electrons produced by the ionization emitted in front of and behind the ionization zone (13) with respect to the axis, *z*, of laser radiation propagation (14); and
- determination means arranged and/or programmed to determine at least the chirality of the molecules from the detected distribution of electrons.

2. The system (1) according to claim 1, **characterized in that** the optical cavity (19) is formed by two spherical mirrors (20a, 20b).

3. The system (1) according to any one of the preceding claims, **characterized in that** the polarization modulator (16) is arranged to vary the polarization ellipticity of the laser radiation (14) continuously as a function of time.

4. The system (1) according to the preceding claim, **characterized in that** the polarization modulator (16) comprises a quarter-wave plate arranged to be rotated about the axis, z, of laser radiation propagation (14).

5. The system (1) according to any one of the preceding caims, **characterized in that** the electron detector comprises at least one velocity vector imager.

6. The system (1) according to any one of the preceding claims, **characterized in that** the pulsed laser source (10) is a femtosecond pulsed laser source.
